**Europäisches Patentamt**

(19) **European Patent Office**

**Office européen des brevets**

(11) Veröffentlichungsnummer: **0 116 915**

**B1**

(12) **EUROPÄISCHE PATENTSCHRIFT**

(45) Veröffentlichungstag der Patentschrift:
06.04.88

(51) Int. Cl.⁴: **E 21 B 43/25**

(21) Anmeldenummer: **84101358.4**

(22) Anmeldetag: **10.02.84**

(54) Verfahren zur Stimulierung von Erdölfördersonden.

(30) Priorität: **16.02.83 AR 292148**

(43) Veröffentlichungstag der Anmeldung:
**29.08.84 Patentblatt 84/35**

(45) Bekanntmachung des Hinweises auf die Patenterteilung:
**06.04.88 Patentblatt 88/14**

(84) Benannte Vertragsstaaten:
**AT DE GB NL**

(56) Entgegenhaltungen:
**EP-A-0 055 200
DE-B-1 284 378
US-A-2 753 303
US-A-2 908 641
US-A-3 970 148
US-A-4 005 020**

(73) Patentinhaber: **HOECHST AKTIENGESELLSCHAFT,
Postfach 80 03 20, D-6230 Frankfurt am Main 80
(DE)**

(72) Erfinder: **Seybold, Anton, Tilmann-
Riemenschneider- Strasse 78, D-8552 Höchstadt
an der Aisch (DE)**
Erfinder: **Gutierrez, Alejandro, Loria 142 (Oeste)
5501- Godoy Cruz, Mendoza (AR)**
Erfinder: **Arkenberg, Pablo, Av. Libertador 3752 11.
Stock "B"/1425, Buenos Aires (AR)**
Erfinder: **Daino, Mario, Olascoaga 2560, Mendoza
(AR)**

## Beschreibung

Die vorliegende Erfindung betrifft ein verbessertes Verfahren zur Stimulierung von Erdölfördersonden durch die Verwendung von spezifischen grenzflächenaktiven Verbindungen gelöst in höhermolekularen Aromaten.

Es ist bekannt, daß besonders bei älteren Bohrungen verstärkt Schwierigkeiten bei der Erdölförderung auftreten, die bedingt sind durch die Ablagerung der höhermolekularen Erdölbestandteile wie Asphaltene, Naphthene, Paraffine und harzartiger Verbindungen im Einzugsbereich der Fördersonden. Dadurch wird die Ölpermeabilität der Lagerstätte stark verringert, so daß der Zufluß am Rohöl nachläßt und nur noch eine Intervall-Förderung von z. B. 2 - 4 m³ Rohöl/Tag und Sonde möglich ist.

Um diese Probleme zu vermindern und die Förderleistung zu erhöhen, ist es bekannt, z. B. Säuren in die Erdöl führenden Schichten einzupressen. Hierbei wird säurelösliches Gestein durch die Säure angegriffen und die Porosität der Formation erhöht, was dann eine Erhöhung der Permeabilität für das Rohöl mit sich bringt. Nachteilig bei diesem Säuern ist allerdings, daß dabei die Formation geschädigt wird. Das gleiche gilt für die sogenannte Fracturierung, bei der die Erdöl führende Formation durch hydraulische Kräfte aufgerissen wird. Eine weitere Methode der Sondenstimulierung besteht darin, Gemische aus Benzol, Toluol und Xylol einzupressen. Diese Verbindungen sind aber schlechte Lösemittel für die höhermolekularen Bestandteile der Rohöle, so daß man große Mengen dieser Lösemittel benötigt.

Folgende Punkte sind bei einer Sonden-Behandlung mit Lösemitteln und Chemikalien wichtig: Verwendung von optimalen Lösemitteln für Asphaltene und Naphthene; Gleichzeitiger Einsatz von nichtionogenen grenzflächenaktiven Substanzen zur Erreichung einer guten Penetration der Injektionsflüssigkeit; Gleichzeitiger Einsatz von dem jeweiligen Rohöltyp angepaßten Emulsionsspaltern, die insbesondere in alten und stark verwässerten Fördersonden eine Emulsionsblockbildung verhindern sollen; Einsatz von Lösemitteln bzw. Lösevermittlern für die vorhandenen Paraffine; Gleichzeitiger Einsatz von grenzflächenaktiv wirkenden Verbindungen, die leicht zwischen Gestein und schwere Rohölphase penetrieren und damit die Wasserbenetzung des Gesteins erhöhen oder gar erst ermöglichen. Damit erreicht man eine deutliche Erhöhung der Ölpermeabilität der bohrlochnahen Formation.

Aus der DE-A-1 284 375 ist es bekannt, zur Verhinderung vor Paraffinablagerungen in Sonden und Leitungen bei der Rohölförderung Mischungen aus oxalkylierten Fettalkoholen, Fettaminen oder Fettsäuren und Naphtholen und deren Estern zu nehmen. Zusätzlich kann man auch noch Emulsionsspalter mitverwenden.

Gegenstand der vorliegenden Erfindung ist ein Verfahren zu Stimulierung von Erdölfördersonden, bei dem man in die Fördersonde höhere Aromaten einpreßt, die ein Gemisch enthalten aus 50 bis 90 Gew.-% eines Amins der Formel

$R^1R^2NH$

wobei $R^1$ 6 $C_{12}$-$C_{22}$-Alkyl oder $C_{12}$-$C_{22}$ Alkenyl und $R^2$ Wasserstoff, $C_{12}$-$C_{22}$-Alkenyl oder $C_{12}$-$C_{22}$-Alkyl bedeutet, das mit 4 bis 20 Mol Ethylenoxid, 6 bis 12 Mol Propylenoxid oder 4 bis 20 Mol eines Gemisches beider Alkylenoxide umgesetzt wurde, 10 bis 50 Gew.-% eines Emulsionsspalters, sowie zusätzlichen Mono-, Di-, oder Tri- ($C_4$-$C_{12}$)alkylphenolen mit einem Gehalt an 4 bis 40 Einheiten Ethylenoxid, Propylenoxid oder einem Gemisch hiervon; $C_{12}$-$C_{22}$-Fettsäuren und Mono- oder Di-($C_3$-$C_8$)-Alkyl-di-, tri- oder tetraethylenglykolethern.

Als Emulsionsspalter kommen generell alle Produkte in Frage, die zum Spalten von Emulsionen aus Erdöl und Wasser geeignet sind. Besonders bevorzugt sind hierbei folgende Produkte: Diisocyanatharze (DE-B-1 642 825), verätherte Phenol-Formaldehyd Kondensationsprodukte (Resolharze, DE-B-2 445 873), oxalkylierte Alkylphenol-Formaldehyd Kondensationsprodukte (US-A-2 499 368, 4 499 370, 2 524 889, 2 560 333 und 2 574 543), Additionsprodukte aus Ethylenoxid-Propylenoxid-Blockpolymeren und Bis-glycidylethern (DE-A-3 049 455), oxalkylierte Additionsprodukte aus Ethylenoxid-Propylenoxid-Blockpolymeren und Bis-glycidylethern (DE-AS-3 049 450) und oxalkylierte Resolharze (DE-B-2 445 873 und deutsche Patentanmeldung P 32 23 691.3). Die Emulsionsspalter können allgemein einzeln oder auch als Mischung verschiedener Arten von Spaltern eingesetzt werden. Dies gilt ebenfals für die Amine der Formel $R^1R^2NH$.

Zusätzlich zu den aufgeführten oxalkylierten Aminen und den Emulsionsspaltern werden noch weitere Verbindungen eingesetzt wie oxalkylierte Mono-, Di- oder Tri($C_4$-$C_{12}$)alkylphenole mit einem Gehalt an 4 bis 40 Einheiten Ethylenoxid, Propylenoxid oder einem Gemisch hiervon, vorzugsweise Octyl- oder Nonylphenol mit 6 bis 20 Einheiten Ethylenoxid; synthetische oder native, gesättigte und ungesättigte $C_{12}$-$C_{22}$-Fettsäure wie Ölsäure, Cocosfettsäure oder Ricinolsäure sowie Mono- oder Di($C_3$-$C_8$)alkyl-di, tri- oder tetraethylenglykolether, vorzugsweise Butylglykol. Bei Mitverwendung dieser Verbindungen setzt sich das Gemisch, das in den höheren Aromaten gelöst wird, wie folgt zusammen: 10 bis 70, vorzugsweise 30 bis 50 % oxalkyliertes Amin, 1 bis 30, vorzugsweise 5 bis 20 % Emulsionsspalter, 1 bis 30, vorzugsweise 5 bis 20 % oxalkyliertes Alkylphenol, 1 bis 30, vorzugsweise 5 bis 20 % der Fettsäure und 1 bis 50, vorzugsweise 5 bis 30 % Glykolether.

Die oben aufgeführten Produkte werden in sogenannten Highflash-Aromaten gelöst, die einen Flammpunkt von über 40° C und einen Midestanteil von ca. 90 % an ein- oder mehrfach durch $C_1$-$C_{10}$-Alkyl substituierten ($C_6$-$C_{14}$)-aromatischen Kohlenwasserstoffen oder ($C_6$-$C_{14}$)-

Cycloalkanen haben, wobei der Rest aus nichtcyclischen, z. B. linearen und verzweigten (C$_4$-C$_{16}$)-Kohlenwasserstoffen besteht. Die Konzentration der Mischung aller obergenannten Produkte in dem Lösemittel beträgt 1 bis 30, vorzugsweise 8 bis 20 Gew.-%. Das Einpressen dieser Lösung in die Erdölfördersonden erfolgt nach den hierbei üblichen Methoden.

Durch die oben beschriebene Sondenstimulierung konnte überraschenderweise ein enorm hoher Ölspiegel über der Förderzone erreicht werden, der auf einen ausgezeichneten Zufluß an Öl aus der Lagerstätte hinweist. Diese Wirkung hat mit nur geringen Unterschieden über die Dauer eines Jahres hinaus angehalten. Mit einem so guten und nachhaltigen Ergebnis konne nicht gerechnet werden. Die gute Wirksamkeit läßt sich vermutlich dadurch erklären, daß durch die oben beschriebene Lösung die relative Öl-Permeabilität derart erhöht wird, daß sich bei der anschließenden Förderung durch Beseitigung von Fließwiderständen nur ein geringen Anteil an schweröslichen Komponenten des Öls erneut ablagern kann. Für die Durchführung des erfindungsgemäßen Verfahrens der Sondenstimulierung sind ca. 9000 bis 50000 Liter Lösung erforderlich. Im Vergleich dazu werden bei der bekannten Sondenstimulierung mit niedrig siedenden Aromaten 150000 bis 200000 Liter benötigt. Ein weiterer Vorteil des erfindungsgemäßen Verfahrens besteht darin, daß die Lagerstätte nicht geschädigt wird und daß das Tensidgemisch unter den Bedingungen der Lagerstätte stabil ist. Zu erwähnen ist auch die kurze Einpresszeit, wodurch der Produktionsausfall gering gehalten wird. Das nach der Stimulierung geförderte Rohöl, das noch Anteile des Stimulierungsmittels enthält, kann in der Raffinerie ohne Störung verarbeitet werden.

**Beispiel 1**

Eine Fördersonde, gebohrt im Jahre 1951, hatte eine Anfangs-Förderung von 32 m$^3$ Öl/Tag und hatte bis Juli 1981 eine Total-Förderung von 70.724 m$^3$ Rohöl, 15.959 m$^3$ Wasser und 1.057.610 m$^3$ Gas. Im Juli 1981 lag die Tagesförderung bei unter 2 m$^3$ Reinöl (gefördert durch Intervall-Pumpen). Es wurden nach Absetzen eines Packers in Höhe der Förderzone (2.298 m - 2.345 m Teufe) insgesamt 9,5 m$^3$ der weiter unten beschriebenen Produkt-Mischung über 12 Stunden lang eingepreßt und für 24 Stunden anschließend einwirken gelassen. Bei der sich anschließenden Anfangsförderung wurden 28 m$^3$ Öl/Tag gefördert, der Ölspiegel war sehr hoch bis auf 1.900 m über der Förderzone in der Sonde gestiegen (vor der Behandlung lag dieser bei 645 m). Nach 12 Monaten wurde eine Durchschnitts-Förderung von 8 - 10 m$^3$/Tag erreicht und ein stabilisierter Ölspiegel von 1.500 m. Dies zeigt einen enormen Zufluß aus der Lagerstätte an.

Aufgrund des Alters der Sondeneinrichtungen konnte nicht voll gefördert werden. Die Fördersteigerung erreichte 300 - 400 %.

Die benutzte Produktmischung bestand aus einer 8 %-igen Lösung in Highflash Aromaten einer Mischung der folgenden Zusammensetzung:

23 Gew.-% Oleylamin + 10 Ethylenoxid,
20 Gew.-% Oleylamin + 15 Ethylenoxid,
13 Gew.-% Butylglykol,
13 Gew.-% des Di-isocyanat-Harzes gemäß Bsp. 1 der DE-AS-1 642 825,
15 Gew.-% Ölsäure,
16 Ge.-% Nonylphenol + 10 Ethylenoxid.

**Beispiel 2**

In der gleichen Weise wie in Beispiel 1 wurde in eine Fördersonde 14,5 m$^3$ einer Produktmischung der weiter unten angegebenen Zusammensetzung injiziert. Auch bei diesem Versuch stieg der Ölspiegel durch den extrem guten Zufluß nach der Sondenbehandlung sehr hoch auf 2.100 m über der Förderzone in der Sonde an (vorher 850 m). Nach einigen Monaten stabilisierte sich der Ölspiegel auf 1.850 m. Durch diese Stimulierung konnte die Rohölförderung von anfänglich ca. 35 m$^3$/Tag auf durchschnittlich 50 m$^3$/Öl Tag, , d.h. um ca. 42 % gesteigert werden.

Die benutzte Produktmischung bestand aus einer 8 %-igen Lösung in Highflash-Aromaten einer Mischung der folgenden Zusammensetzung:

16 Gew.-% Oleylamin + 10 Ethylenoxid,
27 Gew.-% Oleylamin + 15 Ethylenoxid,
13 Gew.-% Butylglykol,
13 Gew.-% des verätherten Phenol-Formaldehyd Kondensationsprodukts gemäß Beispiel 1 der DE-B 2 445 873
15 Gew.-% Ölsäure,
16 Gew.-% Nonylphenol + 10 Ethylenoxid.

**Beispiel 3**

Die Förderrate dieser Sonde betrug 27 m$^3$ Öl/Tag. In der Sonde wurden analog zu Beispiel 1 ein Volumen von 42 m$^3$ einer Produktmischung der weiter unten angegebenen Zusammensetzungg innerhalb von 12 Stunden eingepreßt. Die Stillstandzeit nach dem Einpumpen betrug 48 Stunden. Nach der Behandlung stieg der Ölspiegel von vorher ca. 900 m über der Förderzone in der Sonde auf eine Höhe von 1900 m über der Förderzone an. Die Rohölförderung stieg auf 44 m$^3$ Öl/Tag. Die erreichte Fördersteigerung betrug damit ca. 63 %.

Die eingesetzte Produktmischung setzte sich bei dieser Stimulierungsmaßnahme wie folgt zusammen:

15 Gew.-% Cocosamin + 8 Ethylenoxid,
29 Gew.-% Cocosamin + 12 Ethylenoxid,
14 Gew.-% Butylglykol,
13 Gew.-% oxalkyliertes Additionsprodukt aus Ethylenoxid-Propylenoxid-Blockpolymeren und Bis- glycidyläther gemäß Beispiel 1a der DE-B-3 049 450,
14 Gew.-% Sonnenblumenfettsäure
15 Gew.-% Octylphenol + 10 Ethylenoxid.

**Patentansprüche**

1. Verfahren zur Stimulierung von Erdölfördersonden, dadurch gekennzeichnet, daß man in der Fördersonde höhere Aromaten einpreßt, die ein Gemisch enthalten aus

50 bis 90 Gew.-% eines Amins der Formel R$^1$R$^2$NH

wobei R$^1$ C$_{12}$-C$_{22}$-Alkyl oder C$_{12}$-C$_{22}$-Alkenyl und R$^2$ Wasserstoff, oder C$_{12}$-C$_{22}$-Alkenyl, C$_{12}$-C$_{22}$-Alkyl bedeutet, das mit 4 bis 20 Mol Ethylenoxid, 6 bis 12 Mol Propylenoxid oder 4 bis 20 Mol eines Gemisches beider Alkylenoxide umgesetzt wurde,

10 bis 50 Gew.-% eines Emulsionsspalters, sowie zusätzlichen Mono-, Di-, oder Tri- (C$_4$-C$_{12}$)alkylphenolen mit einem Gehalt an 4 bis 40 Einheiten Ethylenoxid, Propylenoxid oder einem Gemisch hiervon; C$_{12}$-C$_{22}$-Fettsäuren und Mono- oder Di-(C$_3$-C$_8$)-Alkyl-di-, tri- oder tetraethylenglykolethern.

2. Verfahren nach Anspruch 1, dadurch gekennzeichnet, daß man in die Fördersonde eine Lösung einpreßt, die ein Gemisch enthält, bestehend aus 10 bis 70 % oxalkyliertem Amin, 1 bis 30 % Emulsionsspalter, 1 bis 30 % oxalkyliertem Alkylphenol, 1 bis 30 % Fettsäure und 1 bis 50 % Glykolether.

3. Verfahren nach Anspruch 1, dadurch gekennzeichnet, daß man in die Fördersonde eine 1 bis 30 Gew.-% Lösung einpreßt.

**Claims**

1. A process for stimulating petroleum production wells, which comprises injecting, into the production well, higher aromatics which contain a mixture comprising 50 to 90 % by weight of an amine of the formula R$^1$R$^2$NH

where R$^1$ denotes C$_{12}$-C$_{22}$-alkyl or C$_{12}$-C$_{22}$-alkenyl, and R$^2$ denotes hydrogen, C$_{12}$-C$_{22}$-alkenyl or C$_{12}$-C$_{22}$-alkyl, which has been reacted with 4 to 20 moles of ethylene oxide, 6 to 12 moles of propylene oxide or 4 to 20 moles of a mixture of the two alkylene oxides, and 10 to 50 % by weight of an emulsion-breaker, and also additional mono-, di-, or tri-(C$_4$-C$_{12}$)alkylphenols containing 4 to 40 units of ethylene oxide, propylene oxide or a mixture thereof, C$_{12}$-C$_{22}$-fatty acids and mono- or di-(C$_3$-C$_8$)-alkyl di-, tri- or tetraethylene glycol ethers.

2. The process as claimed in claim 1, wherein the solution injected into the production well contains a mixture comprising 10 to 70 % by weight of oxyalkylated amine, 1 to 30 % of emulsion-breaker, 1 to 30 % of oxyalkylated alkylphenol, 1 to 30 % of fatty acid and 1 to 50 % of glycol ether.

3. The process as claimed in claim 1, wherein a 1 to 30 % by weight solution is injected into the production well.

**Revendications**

1. Procédé pour activer des puits d'exploitation de pétrole, procédé caractérisé en ce que l'on injecte sous pression dans le puits des hydrocarbures aromatiques supérieurs contenant un mélange de :

50 à 90 % en poids d'une amine de formule R$^1$R$^2$NH

R$^1$ désignant un alkyle ou un alcényle en C$_{12}$-C$_{22}$ et R$^2$ l'hydrogène ou un alkyle ou un alcényle en C$_{12}$-C$_{22}$, amine que l'on a fait réagir avec de 4 à 20 moles d'oxyde d'éthylène, de 6 à 12 moles d'oxyde de propylène ou de 4 à 20 moles d'un mélange de ces deux oxydes d'alkylènes, 10 à 50 % en poids d'un rupteur d'émulsions, ainsi que des mono-, di- ou tri-(C$_4$-C$_{12}$)-alkylphénols portant de 4 à 40 motifs d'oxyde d'éthylène, de propylène ou d'un mélange des deux; des acides gras en C$_{12}$-C$_{22}$ et des éthers mono- ou di-(C$_3$-C$_8$)-alkyliques de di-, tri- ou tétraéthylène-glycols.

2. Procédé selon la revendication 1 caractérisé en ce que l'on injecte dans le puits une solution contenant un mélange de 10 à 70 % de l'amine oxalkylylée, 1 à 30 % du rupteur d'émulsions, 1 à 30 % d'alkylphénol oxalkylé, 1 à 30 % d'acide gras et 1 à 50 % d'éther glycolique.

3. Procédé selon la revendication 1 caractérisé en ce que l'on injecte dans le puits une solution à une concentration de 1 à 30 % en poids.